# EUROPÄISCHE PATENTANMELDUNG

(11) **EP 3 838 435 A1**
(43) Veröffentlichungstag der Anmeldung: **23.06.2021**
(21) Anmeldenummer: 19218733.4
(22) Anmeldetag: 20.12.2019
(51) Int. Cl.: B21D 28/02, B23D 19/06, B23D 25/02, B23K 26/00, B23K 26/352

(54) **VERFAHREN ZUM KONTINUIERLICHEN SCHNEIDEN VON METALLISCHEN BÄNDERN**

(71) Anmelder: Heinrich Georg GmbH Maschinenfabrik, 57223 Kreuztal (DE)
(72) Erfinder: RUNKEL, Wolfgang, 57072 Siegen (DE); FOLKE, Thomas, 57250 Netphen (DE); MAHRLE, Achim, 01477 Arnsdorf (DE); WETZIG, Andreas, 01257 Dresden (DE)
(74) Vertreter: Moser Götze & Partner Patentanwälte mbB

(57) **Zusammenfassung**

Verfahren zum Schneiden von hochfesten Stählen (3, 3A) bei dem in einem dem Schneidschritt vorgelagerten ersten Schritt der hochfeste Stahl in seiner Festigkeit durch eine lokale Wärmebehandlung (7,8) der zukünftigen Schnittlinie (9) verringert wird und der Schneidschritt durch Schneiden (4, 104, 204) entlang der in der Festigkeit dauerhaft herabgesetzten Schnittlinie (9) stattfindet.

## Beschreibung

Die Erfindung betrifft ein Verfahren und eine Vorrichtung zum kontinuierlichen Schneiden von metallischen Bändern nach Anspruch 1.

Das Schneiden von Metallbändern, insbesondere von durch Abwickeln von StahlCoils bereitgestellten Stahlbändern in Bandanlagen durch Querteilen oder Längsteilen mittels Scheren ist bekannt.

In der Fertigung, insbesondere im Automobilbau, werden vermehrt aus Gewichts- und Festigkeitsgründen hochfeste Stähle mit Zugfestigkeiten über 1200 N/mm² eingesetzt.

Die Schneid- und Querkräfte wachsen bei Zugfestigkeiten über 1200 N/mm² kaum noch an, so dass die Belastung der Scheren an sich nicht problematisch ist.

Allerdings ist das Schneiden von hochfesten Stählen problematisch, da sich die Härten von Messer und Stahl mit Zugfestigkeiten von über 1800 N/mm² annähern. Somit ist die Standzeit der Messer begrenzt.

Es gibt zurzeit keine geeigneten Messerwerkstoffe, die eine ausreichende Standzeit erreichen.

Hinzu kommt, dass die Schnittkanten bei hochfestem Material beim Scherenschnitt rissig werden.

Aus der DE 102 48 207 A1 ist es bekannt, dass zu schneidende Werkstück kurz vor dem Schneiden mittels Laser so aufzuwärmen, dass das Material temporär wärmebedingt aufweicht.

Analog ist aus der DE 10 2009 049 155 A1 bekannt, Außenkanten von Prüflingen zur Reduktion von Kantenrissempfindlichkeit zu erwärmen.

Demgegenüber besteht die Aufgabe der vorliegenden Erfindung darin, ein Verfahren zum Schneiden von hochfesten Stählen bereitzustellen, bei dem der Messerverschleiß vermieden oder zumindest reduziert werden kann und die

Schnittkantenrissigkeit zumindest herabgesetzt ist.

Diese Aufgabe wird durch das in Anspruch 1 wiedergegebene Verfahren gelöst. Vorteilhafte Ausgestaltungen ergeben sich aus den Unteransprüchen und der Beschreibung.

Erfindungsgemäß ist erkannt worden, dass wenn das Verfahren zum Schneiden von metallischen Bändern, insbesondere hochfesten Stählen in einem dem Schneidschritt vorgelagerten ersten Schritt das metallische Band in seiner Festigkeit (bzw. Duktilität, Zugfestigkeit oder Härte) durch eine lokale Wärmebehandlung der zukünftigen Schnittlinie verringert wird und der Schneidschritt durch Schneiden entlang der in der Festigkeit dauerhaft herabgesetzten Schnittlinie stattfindet, es möglich ist, das metallische Band mit besserer Messerstandzeit und geringerer Rissbildung zu bearbeiten, ohne dass dessen hochfesten Eigenschaften flächig beeinflusst werden müssten.

Als metallische Bänder werden auch einzel- und mehrschichtige metallische Bänder angesehen. Auch Materialkombinationen mit Nichtmetallen sollen darunter fallen. Besonders bevorzugt ist es allerdings, wenn es sich um hochfeste Stähle handelt. Hochfest wird vorliegend im Bereich der Zugfestigkeit als größer 500 N/mm² verstanden. Vorzugsweise größer 750 N/mm² und ganz besonders bevorzugt größer 1000 N/mm².

Die Wärmebehandlung kann über eine Haltezeit erfolgen, die nötig ist, um die Herabsetzung der Festigkeit zu erreichen.
Optional kann das Schneiden nach einem Abkühlen erfolgen. Das Abkühlen kann auf die ursprüngliche Ausgangstemperatur (vor der Behandlung) erfolgen oder auf eine Zwischentemperatur zwischen der Temperatur der Wärmebehandlung und der ursprünglichen Ausgangstemperatur.

Es reicht vorliegend aus, wenn nur der sehr schmale Bereich des Schnitts entfestigt wird. Da dieser zudem durch das Schneiden quasi entfernt wird, kann das so erhältliche Blech wie bisher weiterverarbeitet werden.

Die Wärmebehandlung und das Schneiden können aufeinanderfolgend in einer

Vorrichtung bzw. Bandanlage ausgeführt werden. Dann ist die Ausrichtung der wärmebehandelten zukünftigen Schnittlinie und der realen Schnittlinie einfacher als in einer Verfahrensvariante mit separat ausgeführten Bearbeitungsschritten in räumlich getrennten Vorrichtungen.

Wird nämlich die Wärmebehandlung und das Schneiden räumlich in getrennten Vorrichtungen durchgeführt, muss die spätere reale Schnittlinie auf die wärmebehandelte zukünftige Schnittlinie aus dem ersten Schritt ausgerichtet werden.

Es ist also sinnvoll, dass der erste Wärmebehandlungsschritt und der nachfolgende Schneidschritt synchronisiert werden. Insbesondere kann dies durch eine Längenverfolgung z.B. mittels Messrades oder optischer Längenmessung erfolgen. Auch denkbar ist eine Markierung und/oder sensorgestützte Erkennung (z.B. mittels optischer Erkennung) der wärmebehandelten Schnittlinie oder Markierung und der daran erfolgenden Ausrichtung der Schneidwerkzeuge.
So kann z.B. eine Steuerrolle das Stahlband vor einer Kreismesserschere synchron zu den Anlasslinien ausrichten.

Es ist daher möglich, die Wärmebehandlung und das Schneiden auch in getrennten Anlagen durchzuführen, wobei die zweite nachfolgende Anlage dann mit einer Technologie zur Synchronisierung (analog oben) ausgestattet ist.

Vorzugsweise handelt es sich um es ein kontinuierliches Verfahren mit kontinuierlich, durch Abwickeln bereitgestelltem Metallband bzw. Stahlband, welches kontinuierlich wärmebehandelt und später geschnitten wird.

Das Stahlband kann durch den Schneidschritt längsgeteilt oder quergeteilt oder in beliebigen Formen ausgestanzt werden.

Wird es längsgeteilt, wird die Wärmequelle zuvor in Anlagenlaufrichtung synchron zum Stahlband verfahren oder relativ dazu positioniert, um die Wärmebehandlung linienförmig entlang der zukünftigen Längs-Schnittlinie parallel zur Bandkante durchzuführen.

Wird das Stahlband durch den Schneidschritt quergeteilt, wird die Wärmequelle zuvor in einem Winkel quer oder schräg zur Anlagenlaufrichtung bewegt, um die Wärmebehandlung linienförmig entlang der zukünftigen Quer-Schnittlinie durchzuführen. Durch den diagonalen Verfahrweg der Wärmequelle wird auf dem sich bewegenden Stahlband eine Querlinie erzeugt, die unter Abstimmung der Geschwindigkeiten eine zur Bandkante rechtwinklige Querlinie bereitstellt.

Werden beliebige Formen beim Schneidschritt ausgestanzt, so werden Wärmequelle und/oder Metallband relativ zueinander so positioniert bzw. bewegt, dass die Wärmebehandlung punkt- oder linienförmig entlang der zukünftigen Schnittlinie erfolgt. Es versteht sich, dass dazu auch die Wärme einbringende Strahlung selbst umgelenkt, verformt usw. werden kann, um den gewünschten Verlauf zu erhalten. Vorzugsweise wird die Wärmequelle zuvor relativ zum Metallband entlang der Kontur verfahren oder relativ dazu positioniert, um die Wärmebehandlung punkt- oder linienförmig entlang der zukünftigen Schnittlinie durchzuführen.
Das Band wird also z.B. kontinuierlich abgewickelt und es wird eine "beliebig" geformte Anlasslinie ein- oder beidseitig aufgebracht. Die Form bzw. Kontur der Anlasslinie entspricht der Schnittlinie im Stanzwerkzeug.

Die Wärme im Wärmebehandlungsschritt kann mittels Laserstrahl, Elektronenstrahl, Induktion, Konduktion und/oder joulescher Wärmeerzeugung einseitig oder beidseitig eingebracht werden. Die Erwärmung selbst kann also auf beliebige Weise zum Beispiel konduktiv, induktiv über Strahlungserwärmung oder mittels Laser- oder Elektronenstrahlbestrahlung erfolgen. Erfolgt der Wärmeeintrag mittels Laserstrahl oder Elektronenstrahl, so kann der jeweilige Strahl durch Ablenkung und/oder Umlenkung mittels Spiegels, Optiken usw. in geeigneter Weise gelenkt werden, um die gewünschte Bestrahlung zu erzielen.

Besonders geeignet für die Wärmebehandlung ist eine Erwärmung in Analogie zum Widerstandsschweißen (joulesche Wärme), wie sie zum Beispiel in der Automobilfertigung durch Punktschweißen oder Rollnahtschweißen Verwendung findet.
So kann z.B. eine linienförmige Kupfer- oder Wolframelektrode auf einem Schlitten synchron zum Band verfahren und durch eine definierte elektrische Energie im Bereich der Kontaktzone eine geeignete Wärmemenge erzeugen. Auch elektrisch leitende Rollen können linienförmige Linien als Vorbereitung zu einem
Längsteilprozess erzeugen.
Ebenfalls einsetzbar sind Stromrollen, die nur in einem bestimmten Winkelbereich leitend sind.

Des Weiteren besonders geeignet für die Wärmebehandlung ist die Verwendung eines Laserstrahls. Ein Vorteil ist hierbei die berührungslose und lokal konzentrierte Energieeinkopplung in das zu bearbeitende Blech. Ein weiterer Vorteil ist die optische Formbarkeit des Laserstrahlbrennflecks mit exakt definierbaren Intensitätsverteilungen. Dadurch ist es möglich, definierte Wärmefelder in der Bearbeitungszone zu generieren, die in Abhängigkeit von den Prozessbedingungen optimale Behandlungsergebnisse durch Einstellung geeigneter Temperatur-Zeit-Zyklen gewährleisten. So können insbesondere linienförmige oder elliptische Brennfleckgeometrien genutzt werden, um in definierten Temperaturbereichen eine hohe thermische Eindringtiefe bei hohen Bearbeitungsgeschwindigkeiten und gleichzeitig minimalen Bearbeitungsbreiten zu erreichen.

Schnittlinie ist definiert als die Scherstelle beim Schneiden. Sie weist lediglich eine Breite von 0,5 - 10 mm auf. Vorzugsweise zwischen 1 und 8 mm, besonders bevorzugt zwischen 1 und 5 mm.

Unter lokaler Wärmebehandlung wird eine Erwärmung verstanden, die sich im Wesentlichen auf die zukünftige Schnittlinie beschränkt und eine Temperatur sowie Dauer derart aufweist, dass eine nicht nur temporäre Änderung der Duktilität des Stahls stattfindet. Die Temperatur liegt zwischen 500 und 720 °C und die Dauer ist genügend lang, um eine Duktilitätserhöhung in einem ausreichenden Querschnitt des Stahlbandes zu erreichen. Vorzugsweise bis zum halben Querschnitt. Die Temperatur an der Oberfläche der zukünftigen Schnittlinie kann mit Hilfe eines Pyrometers oder einer Thermokamera örtlich und zeitlich aufgelöst gemessen und geregelt werden.

Mit anderen Worten, es wird also über den Temperatur-Zeit-Verlauf der Wärmebehandlung die Duktilität des hochfesten Stahlbands so erhöht, dass dieser ohne Messerverschleiß bzw. Herabsetzung dessen und Verbesserung des Schnittmusters (keine oder weniger Kantenrisse) mit bekannten Scherschneidvorrichtungen längs oder quer geschnitten werden kann.

Das erfindungsgemäße Verfahren lässt sich in einer Bandanlage, in der Stahlcoils abgewickelt werden, als kontinuierliches Verfahren umsetzen. Möglich ist aber auch eine Batch-Verarbeitung in einer Start-Stop-Lösung. In beiden vorgenannten Fällen würde das Erwärmen und das Schneiden an einem laufenden Band durchgeführt werden. Im letztgenannten Fall könnte auch einer oder beide Schritte am stehenden (temporär) Band durchgeführt werden.

Als Schneidwerkzeuge kommen übliche Scherschneidvorrichtungen in Betracht, wie Kreismesserschere, Exzenterschere, Trommelschere, fliegende Schere oder Exzenterschwenkschere sowie Kurbelwellenschere, Hydraulikschere oder Schwenkschere. Zusätzlich können beliebige Stanzwerkzeuge eingesetzt werden.

Weitere Details der Erfindung ergeben sich aus der nachfolgenden Beschreibung von Ausführungsbeispielen anhand der Zeichnung, in der
Fig. 1 eine schematische perspektivische Ansicht einer Längsteilanlage zeigt;
Fig. 2 eine schematische Seitenansicht der Anlage aus Figur 1 zeigt;
Fig. 3 eine schematische Ansicht von oben auf die Anlage aus Figur 1 zeigt;
Fig. 4 eine schematische perspektivische Ansicht einer Querteilanlage zeigt;
Fig. 5 eine schematische Seitenansicht der Anlage aus Figur 4 zeigt;
Fig. 6 eine schematische Ansicht von oben auf die Anlage aus Figur 4 zeigt;
Fig. 7 eine schematische perspektivische Ansicht einer Pressen- bzw. Stanzanlage zeigt;
Fig. 8 eine schematische Seitenansicht der Anlage aus Figur 7 zeigt und
Fig. 9 eine schematische Ansicht von oben auf die Anlage aus Figur 7 zeigt.

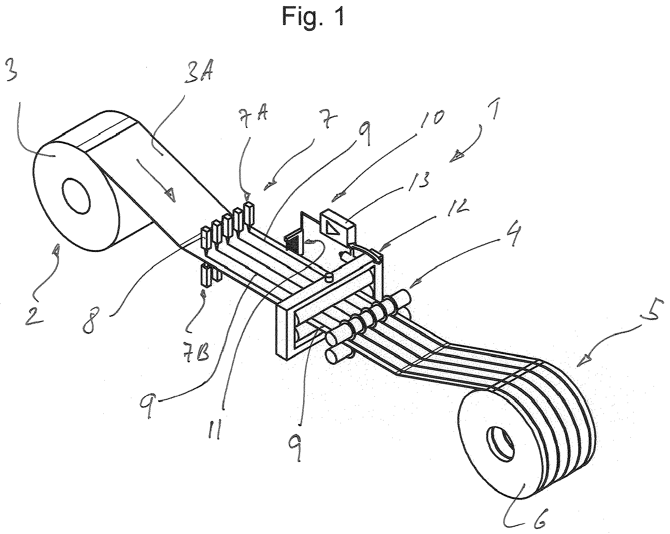

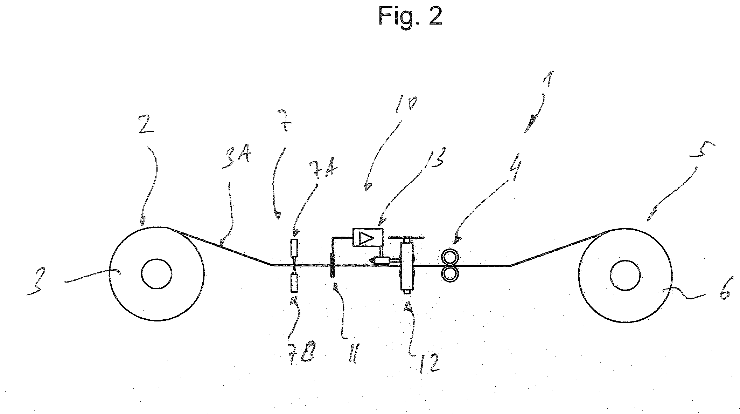

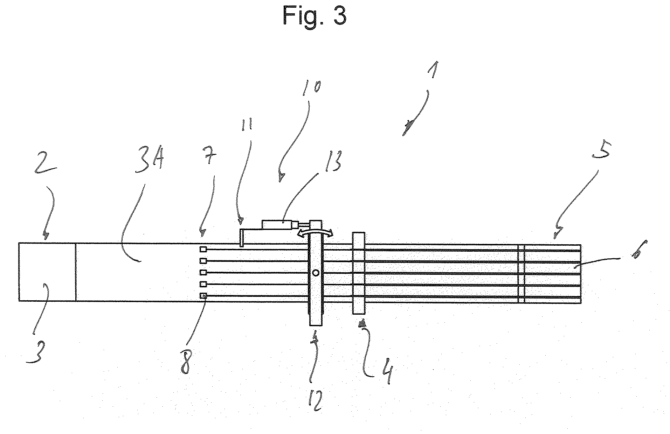

In den Figuren 1 bis 3 ist eine erste Ausführungsform der Erfindung in Gestalt einer Längsteilanlage 1 dargestellt.

In der Längsteilanlage 1 werden (bekanntermaßen) in einer Abwickelvorrichtung 2 Stahlcoils 3 kontinuierlich abgewickelt, über eine Kreismesserschere 4 in Steifen 6 längsgeteilt, sowie diese Streifen 6 in einer Aufwickelvorrichtung 5 wieder aufgewickelt.

Erfindungsgemäß wird zum vereinfachten Schneiden von hochfesten Stählen in einem dem Schneidschritt vorgelagerten ersten Schritt der hochfeste Stahl in seiner Festigkeit durch eine lokale Wärmebehandlung der zukünftigen in Längsrichtung parallel zueinander verlaufenden Schnittlinien 9 verringert und der Schneidschritt findet nach dem Abkühlen durch Schneiden entlang der in der Festigkeit dauerhaft herabgesetzten Schnittlinien statt.

Dazu weist die Längsteilanlage 1 eine der Kreismesserschere 4 vorgelagerte Laserbatterie 7 auf. Diese weist oberhalb eine Laserbatterie 7A sowie auch unterhalb des Stahlbandes 3A eine Laserbatterie 7B mit jeweils auf die zukünftige Schnittlinie 9 ausgerichtete Laservorrichtungen 8 auf, die das Stahlband 3A entlang der zukünftigen Schnittlinie 9 beidseitig erwärmen.

Die einzelnen Laservorrichtungen 8 sind also so zueinander angeordnet, dass der auf die Oberfläche der Oberseite bzw. Unterseite des Stahlbandes 3A fokussierte Laser das Stahlband 3 A durch die Wärmebehandlung entfestigt.

Die Ansteuerung bzw. Einstellung der Laservorrichtungen 8 erfolgt über eine nicht dargestellte Steuerung, in der die Parameter für die Laservorrichtungen (Wärmemenge über Dauer und Intensität etc.) für die jeweilige Stahlsorte hinterlegt sind und die Laservorrichtungen 8 entsprechend ansteuert, um das Stahlband 3A auf eine Temperatur zwischen 500 und 720 °C zu erwärmen, so dass eine Duktilitätserhöhung in 30% des Querschnitts des Stahlbands erreicht wird.

Entlang der so vorbehandelten Schnittlinie 9 schneidet dann die Kreismesserschere 4 das Stahlband 3A in die Streifen 6.

Damit der Schneidschritt tatsächlich entlang der wärmebehandelten Schnittlinie 9 exakt stattfindet, weist die Anlage 1 eine weitere Steuereinrichtung 10 auf, die im Wesentlichen aus einer optischen Bandlagenerkennung 11, der eigentlichen Steuerung 13 sowie einer von der Steuerung 13 gesteuerte Steuerrolleneinrichtung 12 auf, die die Ausrichtung der wärmebehandelten zukünftigen Schnittlinie 9 über die Ausrichtung des Bandes 3A mit den eigentlichen Schneiden der Kreismesserschere 4 sicherstellt.

Die Steuerung 13 kann also aus der bekannten Lage der Laservorrichtungen 8 und der erkannten Bandlage (z.B. dessen Kante) den Verlauf der Anlasslinien zu der bekannten Lage der Kreismesser berechnen und bei Bedarf einen Ausgleich über die Steuerrolleneinrichtung 12 ausführen.

Es wird also über eine sensorgestützte Erkennung der wärmebehandelten Schnittlinie und der Ausrichtung des Bands zu den Schneidwerkzeugen eine Synchronisierung der Anlasslinie und der Schnittlinie durchgeführt.

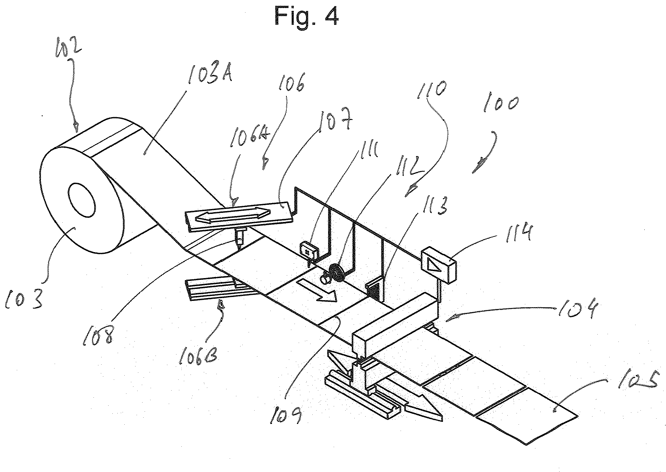

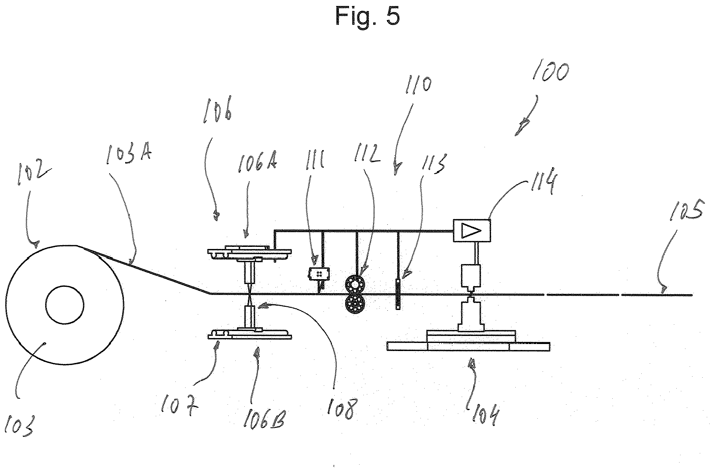

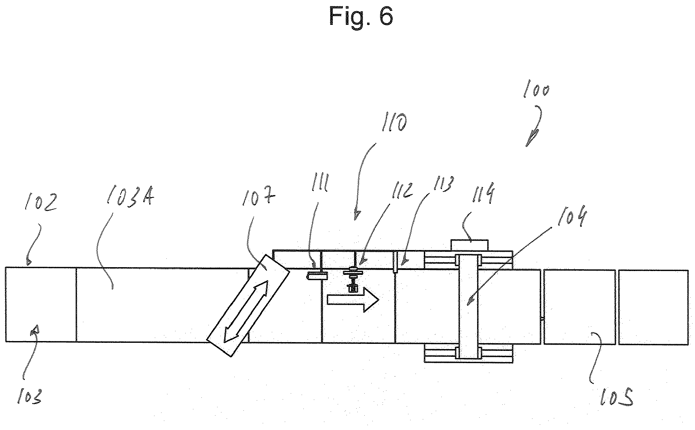

In den Figuren 4 bis 6 ist eine zweite Ausführungsform der Erfindung in Gestalt einer Querteilanlage 100 dargestellt.

In der Querteilanlage 100 werden (bekanntermaßen) in einer Abwickelvorrichtung 102 Stahlcoils 103 kontinuierlich abgewickelt und über eine einstellbare Querteilschere 104 in Bleche 105 quergeteilt.

Im Unterschied zur obigen Anlage, verlaufen vorliegend die Schnittlinien 109 quer zur kontinuierlichen Laufrichtung des Stahlbands 103A.

Um auch hier eine Entfestigung durch Erwärmung der zukünftigen Schnittlinien 109 zu erreichen, muss die Wärmequelle zuvor in einem Winkel quer oder schräg zur Anlagenlaufrichtung bewegt werden, um die Wärmebehandlung linienförmig entlang der zukünftigen querverlaufenden Schnittlinie 109 durchzuführen.

Dazu weist die Anlage 100 eine oberhalb und unterhalb des Stahlbands 103A angeordnete Schlittenanordnung 106 auf, an der ein entsprechender Laser 108 jeweils diagonal zur Laufrichtung des Stahlbandes 103A gezielt auf einem Schlitten 107 verfahrbar ist. Durch das gleichzeitige Bewegen des Stahlbandes und der dazu diagonalen Bewegung des Lasers 108 wird eine querverlaufende Wärmebehandlung entlang der zukünftigen querverlaufenden Schnittlinie 109 erzielt. Anstelle der Schlittenanordnung kann alternativ jedoch auch eine optische Auslenkung des Laserstrahlbrennflecks entlang der Schnittlinie 109 vorgesehen sein.

Die Ansteuerung bzw. Einstellung der Laser 108 erfolgt analog der Anlage 1.

Damit der Schneidschritt tatsächlich entlang der wärmebehandelten Schnittlinie 109 exakt stattfindet, weist die Anlage 100 eine Steuereinrichtung 114 in Kombination mit Messeinrichtungen 111, 112 auf. Dabei wird die Lage der Anlasslinie durch eine Positionsmeldung der Wärmvorrichtung (Laser 108 auf Schlitten 107) in Verbindung mit einer Positionsverfolgung am Stahlband 103A z.B. mittels eines Messrades oder geeigneter Sensoren verfolgt und anschließend berechnet. Vorliegend erfolgt dies mittels eines Messrades 112 oder einer optischen Geschwindigkeitsmessung 111.

Wenn der Wärmebehandlungsschritt auf einer eigenständigen (getrennten) Bandanlage stattfindet, so wird die Anlasslinie durch einen optischen Sensor 113 erkannt und mit einer Positionsverfolgung in Form eines Messrades 112 oder einer optischen Geschwindigkeitsmessung 111 berechnet und verfolgt.

Die Steuereinrichtung 114 synchronisiert die Schere 104 auf Bandgeschwindigkeit und löst den Schnitt aus, wenn Anlasslinie 109 und Messer eine deckungsgleiche Position eingenommen haben.

Von der Steuerung 114 wird also die einstellbare Querteilschere 104 so relativ zum Stahlband 103A positioniert, dass der Schnittvorgang exakt an der Anlasslinie bzw. Schnittlinie 109 stattfindet.

Die Steuerung 114 kann also aus der Schlittenbewegung 107, der erkannten Bandgeschwindigkeit und dem Verlauf der Anlasslinien die Position bzw. Lage der Querteilmesser berechnen und bei Bedarf einen Ausgleich ausführen, da die Querteilschere 104 einstellbar ist.

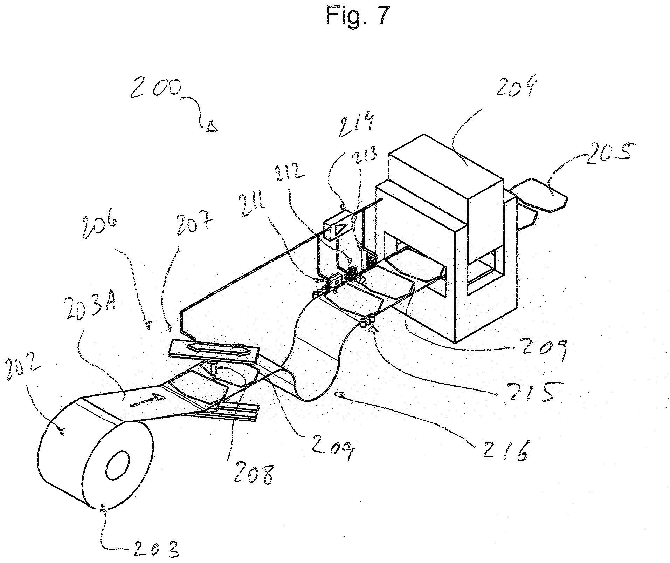

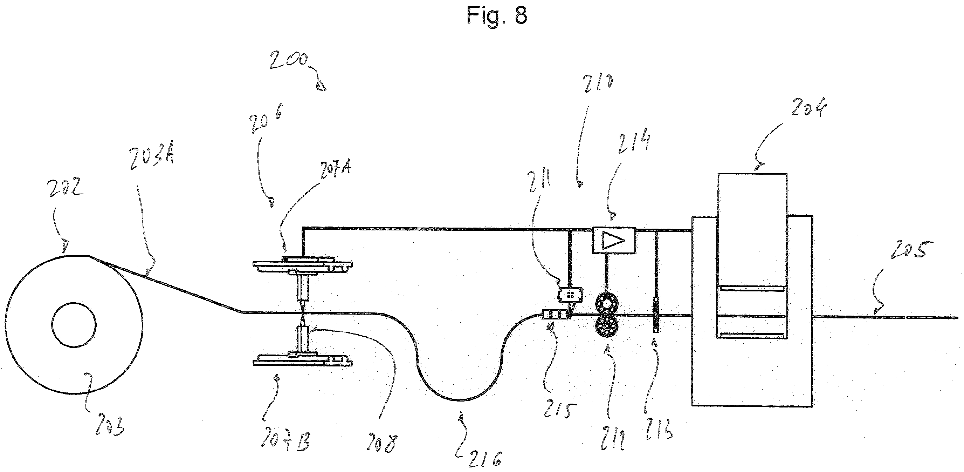

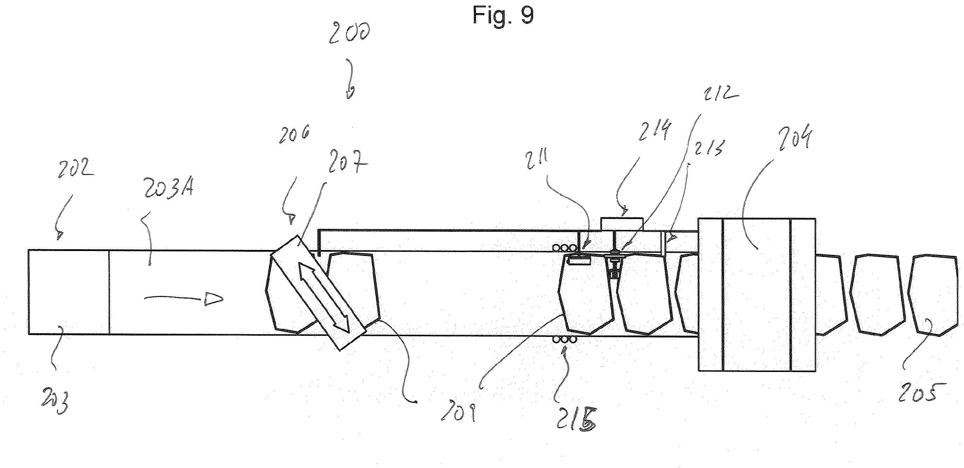

In den Figuren 7 bis 9 ist eine dritte Ausführungsform der Erfindung in Gestalt einer kontinuierlichen Stanzanlage 200 dargestellt, die analog der Querteilanlage aufgebaut ist.

In der Stanzanlage 200 werden in einer Abwickelvorrichtung 202 Stahlcoils 203 kontinuierlich abgewickelt und über eine einstellbare Presse bzw. Stanze 204 in Bleche bzw. Formplatinen 205 gewünschter Form ausgestanzt.

Im Unterschied zur obigen Anlage, verlaufen vorliegend die Schnitt- bzw. Stanzlinien 209 nicht nur quer zur kontinuierlichen Laufrichtung des Stahlbands 203A sondern auch längs, d.h. entlang der Kontur der zukünftigen Stanzlinie bzw. der Platinenform.

Um auch hier eine Entfestigung durch Erwärmung der zukünftigen Stanzlinie 209 zu erreichen, muss die Wärmequelle zuvor CNC gesteuert bewegt werden, um die Wärmebehandlung linienförmig entlang der zukünftigen Kontur bzw. Stanzlinie 209 durchzuführen.

Dazu weist die Anlage 200 eine oberhalb und unterhalb des Stahlbands 203A angeordnete Schlittenanordnung 206 auf, an der ein entsprechender Laser 208 jeweils diagonal zur Laufrichtung des Stahlbandes 203A gezielt auf einem Schlitten 207 verfahrbar ist. Durch das gleichzeitige Bewegen des Stahlbandes und der dazu diagonalen Bewegung des Lasers 208 wird eine Wärmebehandlung entlang der zukünftigen Stanzlinie 209 erzielt, die so beliebig ausgestaltet sein kann. Anstelle der Schlittenanordnung kann alternativ jedoch auch eine optische Auslenkung des Laserstrahlbrennflecks entlang der Stanzlinie 209 vorgesehen sein.

Die Ansteuerung bzw. Einstellung der Laser 208 erfolgt analog der Anlage 1 bzw. 100.

Damit der Schneid- bzw. Stanzschritt tatsächlich entlang der wärmebehandelten Schnittlinie 209 exakt stattfindet, weist die Anlage 200 eine Steuereinrichtung 214 in Kombination mit Messeinrichtungen 211, 212 auf. Dabei wird die Lage der Anlasslinie durch eine Positionsmeldung der Wärmvorrichtung (Laser 208 auf Schlitten 207) in Verbindung mit einer Positionsverfolgung am Stahlband 203A in Form eines Messrades 212 oder einer optischen Geschwindigkeitsmessung 211 berechnet und verfolgt.

Da die Stanze im Start-Stop Modus arbeitet werden die Längenunterschiede durch eine Schlaufe 216 kompensiert. Das Band wird am Auslauf der Schlaufe 216 durch Führungsrollen 215 zentriert und geführt.

Die Lage der wärmebehandelten Schnittlinie 209 wird über eine optische Erkennung 213 detektiert und mit einer Positionsverfolgung in Form eines Messrades 212 oder einer optischen Geschwindigkeitsmessung 211 berechnet und verfolgt. Somit kann die Steuerung 214 über die Führungsrollen 215 und Vorschubgeschwindigkeit des Bandes 203A diese entsprechend der Teilung zum Stanzwerkzeug positionieren.

Die Steuereinrichtung 214 synchronisiert die Stanze 204 auf die Bandgeschwindigkeit und löst den Schnitt aus, wenn Anlasslinie 209 und Stanzwerkzeug eine deckungsgleiche Position eingenommen haben.

### Bezugszeichenliste

- 1: Längsteilanlage
- 2: Abwickelvorrichtung
- 3: Stahlcoil
- 4: Kreismesserschere
- 5: Aufwickelvorrichtung
- 6: Steifen
- 7: Laserbatterie
- 8: Laservorrichtungen
- 9: Schnittlinie
- 10: Steuereinrichtung
- 11: Bandlagenerkennung
- 12: Steuerrolleneinrichtung
- 13: Steuerung

- 100: Querteilanlage
- 102: Abwickelvorrichtung
- 103: Stahlcoil
- 104: Querteilschere
- 105: Bleche
- 106: Schlittenanordnung
- 107: Schlitten
- 108: Laseranordnung
- 109: Schnittlinien

- 111: optischen Geschwindigkeitsmessung 111
- 112: Messrad
- 113: Sensor
- 114: Steuereinrichtung

- 200: kontinuierlichen Stanzanlage
- 202: Abwickelvorrichtung
- 203: Stahlcoil
- 204: Presse bzw. Stanze
- 205: Blech
- 206: Schlittenanordnung
- 207: Schlitten
- 208: Laser
- 209: Schnitt- bzw. Stanzlinien

- 211: optische Geschwindigkeitsmessung
- 212: Messrad
- 213: Erkennung
- 214: Steuereinrichtung
- 215: Führungsrollen
- 216: Schlaufe

## Patentansprüche

1. Verfahren zum Schneiden von metallischen Bändern, insbesondere hochfesten Stählen bei dem in einem dem Schneidschritt vorgelagerten ersten Schritt das metallische Band, insbesondere hochfester Stahl in seiner Festigkeit durch eine lokale Wärmebehandlung der zukünftigen Schnittlinie verringert wird und der Schneidschritt durch Schneiden entlang der in der Festigkeit dauerhaft herabgesetzten Schnittlinie stattfindet.

2. Verfahren nach Anspruch 1, **dadurch gekennzeichnet, dass** Wärmequelle bzw. -strahlung und/oder Metallband relativ zueinander so positioniert und/oder bewegt werden, dass die Wärmebehandlung entlang der zukünftigen Schnittlinie erfolgt.

3. Verfahren nach Anspruch 1 oder 2, **dadurch gekennzeichnet, dass** der erste Wärmebehandlungsschritt und der nachfolgende Schneidschritt synchronisiert werden, insbesondere durch eine Längenverfolgung oder sensorgestützte Erkennung der wärmebehandelten Schnittlinie und/oder der Ausrichtung der Schneidwerkzeuge.

4. Verfahren nach einem der vorhergehenden Ansprüche, **dadurch gekennzeichnet, dass** es ein kontinuierliches Verfahren mit kontinuierlich, durch Abwickeln bereitgestelltem Metallband ist, welches kontinuierlich wärmebehandelt und später geschnitten wird.

5. Verfahren nach einem der vorhergehenden Ansprüche, **dadurch gekennzeichnet, dass** das Metallband durch den Schneidschritt längsgeteilt wird und dazu die Wärmequelle zuvor in Anlagenlaufrichtung synchron zum Stahlband verfährt oder relativ dazu positioniert wird, um die Wärmebehandlung linienförmig entlang der zukünftigen Längs-Schnittlinie durchzuführen.

6. Verfahren nach einem der vorhergehenden Ansprüche 1 bis 4, **dadurch gekennzeichnet, dass** das Metallband durch den Schneidschritt quergeteilt wird und dazu die Wärmequelle zuvor in einem Winkel quer oder schräg zur Anlagenlaufrichtung bewegt wird, um die Wärmebehandlung linienförmig entlang der zukünftigen Quer-Schnittlinie durchzuführen.

7. Verfahren nach einem der vorhergehenden Ansprüche 1 bis 4, **dadurch gekennzeichnet, dass** das Metallband durch den Schneidschritt gestanzt wird und dazu die Wärmequelle zuvor relativ zum Metallband entlang der Kontur verfahren oder relativ dazu positioniert wird, um die Wärmebehandlung linienförmig entlang der zukünftigen Stanzlinie durchzuführen.

8. Verfahren nach einem der vorhergehenden Ansprüche, **dadurch gekennzeichnet, dass** die Wärme im Wärmebehandlungsschritt mittels Laserstrahl, Elektronenstrahl, Induktion, Konduktion und/oder Joulescher Wärme einseitig oder beidseitig eingebracht wird.

9. Verfahren nach einem der vorhergehenden Ansprüche, **dadurch gekennzeichnet, dass** die Oberflächentemperatur der durch die lokale Wärmebehandlung erwärmten künftigen Schnittlinie mit Hilfe eines Pyrometers oder einer Thermokamera gemessen und geregelt wird.

10. Verfahren nach einem der vorhergehenden Ansprüche, **dadurch gekennzeichnet, dass** die Wärme im Wärmebehandlungsschritt kontaktierend oder kontaktlos eingebracht wird.

11. Verfahren nach einem der vorhergehenden Ansprüche, **dadurch gekennzeichnet, dass** der Schneidschritt ein kontinuierlicher Scherenschnitt entlang der wärmebehandelten Schnittlinie ist.

12. Verfahren nach einem der vorhergehenden Ansprüche, **dadurch gekennzeichnet, dass** der Schneidschritt ein am kontinuierlich bewegten Metallband intermittierend durchgeführter Stanzschritt ist.
